# EUROPEAN PATENT SPECIFICATION

(11) **EP 3 879 253 B1**
(45) Date of publication and mention of the grant of the patent: **05.11.2025**
(21) Application number: 19898106.0
(22) Date of filing: 11.12.2019
(51) Int. Cl.: G01L 19/00, G01L 19/14, G06K 19/077, H01Q 1/22, H01Q 7/00

(54) **PHYSICAL QUANTITY MEASUREMENT DEVICE**
VORRICHTUNG ZUR MESSUNG EINER PHYSIKALISCHEN GRÖSSE
DISPOSITIF DE MESURE D'UNE QUANTITÉ PHYSIQUE

(30) Priority: 17.12.2018 JP 2018235236
(43) Date of publication of application: 15.09.2021
(73) Proprietor: NAGANO KEIKI CO., LTD., Tokyo 143-8544 (JP)
(72) Inventor: KUBO, Ryousuke, Tokyo 143-8544 (JP); MURAMATSU, Hideki, Tokyo 143-8544 (JP)
(74) Representative: Page White Farrer
(86) International application number: PCT/JP2019/048386
(87) International publication number: WO 2020/129762

(56) References cited:
- EP-A2- 0 855 674
- WO-A1-2005/093900
- WO-A1-2014/141906
- JP-A- 2005 067 585
- JP-A- 2011 254 307
- JP-A- 2011 254 307
- JP-A- H10 203 066
- JP-A- H11 195 921
- JP-A- H11 195 921
- US-A1- 2006 070 230

## Description

### TECHNICAL FIELD

The present invention relates to a physical quantity measuring device comprising an RFID tag that comprises an RFID antenna.

### BACKGROUND ART

An RFID tag including an insulating substrate, whose top and bottom surfaces are each provided with an antenna pattern, has been known (see, for instance, JP 4826195 B2).

Main coil portions of the antenna patterns provided on the top and bottom surfaces of the RFID tag disclosed in JP 4826195 B2 are arranged to be overlapped in a plan view, thereby increasing the length of the coil portions and, consequently, the inductance as compared with an instance provided with an antenna pattern only on one of the top and bottom surfaces. The size of the RFID tag can thus be reduced.

US 2006/070230 A1 discloses a ring assembly of an antenna conductor and transponder affixed to a tyre of a vehicle by an adhesive material.

WO 2005/093900 A1 discloses an ID chip which includes an integrated circuit using a semiconductor element formed from a thin semiconductor film and an antenna connected to the integrated circuit. The antenna and the integrated circuit are formed on a substrate, and a conducting wire or a conductive film included in the antenna is divided into two layers and formed so as to sandwich the substrate provided with the integrated circuit.JP H11 195921 A discloses a card antenna in which a continuous conductor is formed as a coil on a front side and a rear side of a board provided to an IC card, and a coil pattern on the front side of the board is formed deviated from a coil pattern on the rear side of the board, and the patterns on the front and rear sides are connected via throughholes. JP 2011 254307 A discloses an IC card which comprises an antenna sheet, an IC chip, and a card base portion, the antenna sheet comprising a film base material which includes antenna coils in parallelogram shape disposed on the front and rear surfaces thereof. EP 0855674 A2 discloses a contactless IC card in which the wiring patterns of a coil on the surface side and a coil on the rear side are arranged so as not to be in overlapped positions.

### SUMMARY OF THE INVENTION

### PROBLEMS TO BE SOLVED BY THE INVENTION

As described above, the inductance can be increased by the related art disclosed in JP 4826195 B2. However, the main coil portions of the antenna patterns provided on the top and bottom surfaces of the insulating substrate, which are wired in a manner mutually overlapped as seen through one of the top and bottom surfaces, cannot increase an antenna area per a unit area.

If the size of such an RFID tag is reduced, the antenna portion sometimes becomes too small to achieve a desired communication performance.

An object of the invention is to provide a physical quantity measuring device comprising an RFID tag that comprises an RFID antenna that are capable of achieving a desired communication performance and whose size can be reduced.

### MEANS FOR SOLVING THE PROBLEMS

The present invention provides a physical quantity measuring device according to claim 1.

According to the invention, the first antenna pattern and the second antenna pattern are provided at positions for the main antenna portions not to be overlapped in the plan view of the first surface of the insulating substrate with the second surface being seen through from the first surface. Accordingly, the antenna area per a unit area can be increased. The desired communication performance can thus be achieved and the size of the RFID antenna can be reduced.

Further, since the antenna patterns are provided on both surfaces of the insulating substrate, the length of the antenna pattern can be increased as compared with an antenna pattern provided only on one surface of the insulating substrate. Accordingly, the inductance and, consequently, induced electromotive force can be increased.

In the physical quantity measuring device according to the invention, it is preferable that the first antenna pattern and the second antenna pattern respectively include a first spiral pattern and a second spiral pattern, one of the first spiral pattern and the second spiral pattern extending from an inside to an outside and the other of the first spiral pattern and the second spiral pattern extending from the outside to the inside, the RFID antenna includes a connecting portion disposed in a through hole provided in the insulating substrate, the connecting portion electrically connecting an outer end portion of the first antenna pattern and an outer end portion of the second antenna pattern, and the first antenna pattern and the second antenna pattern each include a crossover portion, the crossover portion being disposed at a position for the first antenna pattern and the second antenna pattern to be intersected in the plan view of the first surface with the second surface being seen through the first surface.

According to the above arrangement, one of the spiral patterns of the first antenna pattern and the second antenna pattern extends from the inside to the outside and the other of the spiral patterns extends from the outside to the inside. The outer end portions of the first antenna pattern and the second antenna pattern are electrically connected by the connecting portion disposed in the through hole. Accordingly, the first antenna pattern and the second antenna pattern, whose outer end portions are mutually connected, can be connected by a shorter connecting portion. The loss of electric current in the connecting portion can thus be reduced. Further, the connecting portion can be easily installed during a manufacturing process.

Further, the first antenna pattern and the second pattern are provided with the crossover portion. Accordingly, in the plan view of the first surface of the insulating substrate with the second surface being seen through the first surface, the first antenna pattern and the second antenna pattern have the same rotation direction of the spiral when the first antenna pattern and the second antenna pattern are traced along the connection route thereof. The electric currents, which are generated in each of the first antenna pattern and the second antenna pattern when the first antenna pattern and the second antenna pattern receive a magnetic field in a predetermined direction, thus flow in the same direction, so that the electric currents flowing in the first antenna pattern and the second antenna pattern are prevented from being mutually cancelled.

In the physical quantity measuring device according to the invention, it is preferable that the first antenna pattern and the second antenna pattern respectively include a first spiral pattern and a second spiral pattern, the first spiral pattern and the second spiral pattern extending from an inside to an outside, and the RFID antenna includes a connecting portion disposed in a through hole provided in the insulating substrate, the connecting portion electrically connecting an outer end portion of the first antenna pattern and an inner end portion of the second antenna pattern.

According to the above arrangement, the first antenna pattern and the second antenna pattern have the same spiral direction from the center in addition to the same rotation direction in the plan view of the first surface of the insulating substrate with the second surface being seen through the first surface. Further, the first antenna pattern and the second antenna pattern do not intersect. Accordingly, the first antenna pattern and the second antenna pattern are not overlapped over the entire surface, thereby enlarging the antenna area. Further, the electric currents generated in the first antenna pattern and the second antenna pattern flow in the same direction, so that the electric currents flowing in the first antenna pattern and the second antenna pattern can be prevented from being mutually cancelled.

In the physical quantity measuring device according to the invention, it is preferable that the insulating substrate includes a plurality of layered insulating substrates, and the RFID antenna includes an insulation layer interposed between the plurality of layered insulating substrates.

According to the above arrangement, the antenna pattern can be provided on both surfaces of the plurality of layered insulating substrates. Accordingly, the length and, consequently, inductance of the antenna pattern in a form of a coil can be increased, thereby increasing the induced electromotive force.

Further, according to the invention, the electronic circuit can be driven by the induced electromotive force generated by the RFID tag. Accordingly, the detection signals outputted by the sensor module can be received by the electronic circuit without requiring any power source (e.g. a battery).

Further, the electronic circuit is electrically connected with the RFID tag. The detection signal received by the electronic circuit can thus be wirelessly outputted to an outside. Accordingly, wires for outputting the detection signals to an outside are not required.

### BRIEF EXPLANATION OF DRAWINGS

Fig. 1 is a perspective view showing an outline of a physical quantity measuring device according to a first exemplary embodiment of the invention.
Fig. 2 is a cross-sectional perspective view showing the outline of the physical quantity measuring device according to the first exemplary embodiment.
Fig. 3 is a plan view showing an outline of a first surface of an RFID tag in the first exemplary embodiment.
Fig. 4 is a plan view showing an outline of a second surface of the RFID tag in the first exemplary embodiment.
Fig. 5 is a cross-sectional view schematically showing the RFID tag, taken along a C-C line in Fig. 4.
Fig. 6 is a cross-sectional view schematically showing the RFID tag, taken along an A-A line in Fig. 3.
Fig. 7 is a plan view showing a B area in Fig. 3 in an enlarged manner.
Fig. 8 is a plan view showing an outline of a first surface of an RFID tag to be comprised in a physical quantity measuring device according to a second exemplary embodiment.
Fig. 9 is a plan view showing an outline of a second surface of the RFID tag in the second exemplary embodiment.
Fig. 10 is a cross-sectional view schematically showing the RFID tag taken along a D-D line in Fig. 9.
Fig. 11 is a cross-sectional view schematically showing the RFID tag taken along an E-E line in Fig. 9.
Fig. 12 is a cross-sectional view schematically showing an RFID tag to be comprised in a physical quantity measuring device according to a third exemplary embodiment.

### DESCRIPTION OF EMBODIMENT(S)

### First Exemplary Embodiment

A first exemplary embodiment of the invention will be described below with reference to the attached drawings.

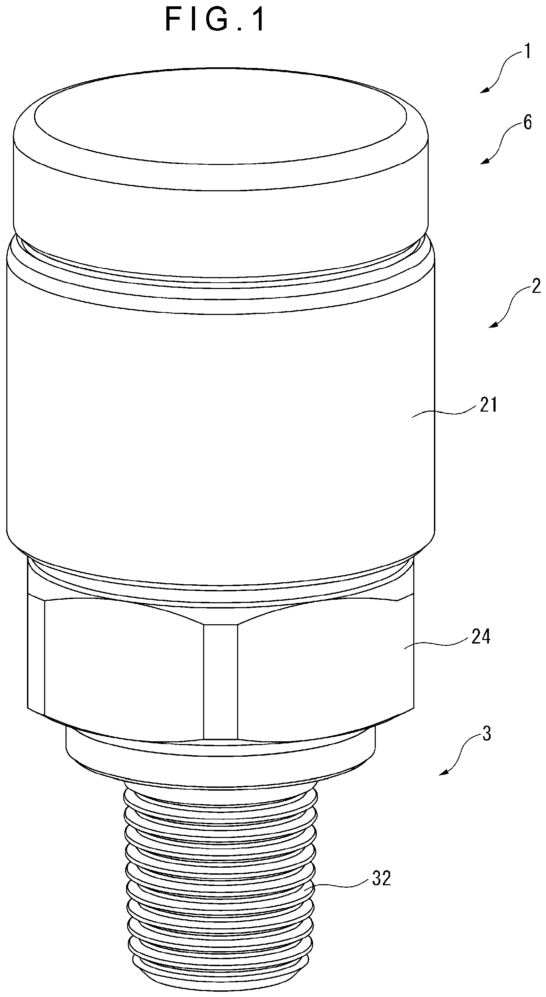

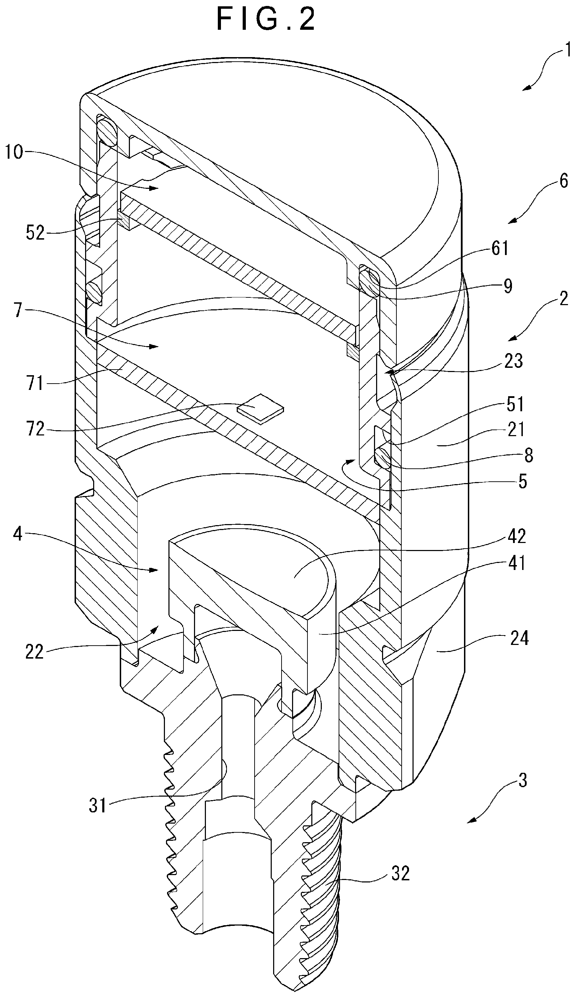

Fig. 1 is a perspective view showing an outline of a physical quantity measuring device 1 according to the first exemplary embodiment. Fig. 2 is a cross-sectional perspective view showing the outline of the physical quantity measuring device 1.

As shown in Figs. 1 and 2, the physical quantity measuring device 1 includes a cylindrical case 2, a joint 3, a sensor module 4, a guide member 5, a cap member 6, a circuit board 7, a first sealing member 8, a second sealing member 9, and an RFID tag 10.

### Cylindrical Case

The cylindrical case 2, which is a metallic component in a form of a hollow cylinder, includes a circumferential portion 21, a first opening 22 and a second opening 23 provided at a first end and a second end of the cylindrical case 2, respectively, and a tool engagement portion 24 provided at the first end and engageable with a tool (e.g. a wrench). It should be noted that the cylindrical case 2 is not necessarily in a form of the hollow cylinder but is optionally in a form of a polygonal pipe (e.g. a quadrangular pipe and a hexagonal pipe). Further, the tool engagement portion 24 is not necessarily provided at the first end of the cylindrical case 2.

### Joint

The joint 3 is a metallic component covering the first opening 22 of the cylindrical case 2. In the present exemplary embodiment, the joint 3 is connected by welding to an end of the cylindrical case 2 provided with the first opening 22.

It should be noted that the joint 3 is not necessarily connected to the cylindrical case 2 by welding but is optionally screwed to be attached to the cylindrical case 2.

The joint 3 is provided with an introduction port 31 for introducing a measurement target fluid. Further, the joint 3 is provided with a male thread 32 to be screwed into an attachment target (not shown).

It should be noted that the joint 3 is not necessarily provided with the male thread 32 but is optionally provided with, for instance, a female thread. Further, the joint 3 is configured to be welded to be attached to the attachment target in some embodiments.

### Sensor Module

The sensor module 4 includes a cylindrical portion 41 attached to a first end of the joint 3 and a diaphragm 42 integrally formed at a first end of the cylindrical portion 41.

A strain gauge (not shown), which is configured to detect the pressure of the measurement target fluid introduced through the introduction port 31, is formed on the diaphragm 42.

It should be noted that the sensor module 4 is not necessarily provided with the diaphragm 42 but is optionally provided with, for instance, a so-called MEMS (Micro Electro Mechanical System) sensor. In other words, the sensor module 4 is designed in any manner as long as the pressure of the measurement target fluid is detectable.

### Guide Member

The guide member 5 is a component in a form of a hollow cylinder made of a resin. The guide member 5 is disposed in the second opening 23 of the cylindrical case 2 with a base end of the guide member 5 being housed in the cylindrical case 2 and a distal end of the guide member 5 being projected from the second opening 23 of the cylindrical case 2.

The guide member 5 is provided with a first sealing member attachment groove 51 and an RFID tag attachment portion 52 on an outer circumferential surface and an inner circumferential surface, respectively.

The first sealing member attachment groove 51 is a groove in which the first sealing member 8 is attached. In the present exemplary embodiment, the first sealing member 8 is provided by a so-called O-ring. Thus, when the base end of the guide member 5 is received in the cylindrical case 2, the first sealing member 8 is attached in the first sealing member attachment groove 51, thereby providing a seal for a space defined between the outer circumferential surface of the guide member 5 and the inner circumferential surface of the cylindrical case 2. Accordingly, moisture or the like is kept from entering an interior of the cylindrical case 2 through the space between the outer circumferential surface of the guide member 5 and the inner circumferential surface of the cylindrical case 2.

It should be noted that the guide member 5 is not necessarily configured as described above but is, for instance, optionally not provided with the first sealing member attachment groove 51. In this case, the first sealing member 8 is optionally not provided between the guide member 5 and the cylindrical case 2.

The RFID tag attachment portion 52 projects from an inner surface of a part of the guide member 5 near the distal end of the guide member 5. Accordingly, the RFID tag 10 can be provided near the cap member 6 by attaching the RFID tag 10 on the RFID tag attachment portion 52. It should be noted that the RFID tag attachment portion 52 is not necessarily configured as described above but is optionally provided, for instance, by a groove formed in the inner surface of the guide member 5.

Further, the RFID tag 10 is not necessarily arranged as described above but is optionally attached, for instance, on the inner surface of the cylindrical case 2. In other words, the RFID tag 10 is attached at any position inside the guide member 5 and the cylindrical case 2.

### Cap Member

The cap member 6 is a bottomed cylindrical component made of a resin and disposed to cover an end of the guide member 5. In the present exemplary embodiment, the cap member 6 is fitted on the distal end of the guide member 5. It should be noted that the cap member 6 is not necessarily fitted on the distal end of the guide member 5 but is, for instance, screwed on the distal end of the guide member 5.

Further, the cap member 6 is provided with a second sealing member attachment groove 61 in which the second sealing member 9 is attached. In the present exemplary embodiment, the second sealing member 9 is provided by a so-called O-ring. Thus, when the cap member 6 is fitted to the distal end of the guide member 5, the second sealing member 9 is attached in the second sealing member attachment groove 61, thereby providing a seal for a space defined between the cap member 6 and the guide member 5. Accordingly, moisture or the like is kept from entering an interior of the cylindrical case 2 through the space between the cap member 6 and the guide member 5.

It should be noted that the cap member 6 is not necessarily configured as described above but is, for instance, optionally not provided with the second sealing member attachment groove 61. In this case, the second sealing member 9 is optionally not provided between the cap member 6 and the guide member 5.

### Circuit Board

The circuit board 7 includes a substrate body 71 and an electronic circuit 72.

The substrate body 71 is a disc-shaped component provided with a wiring pattern (not shown) and the like on top and bottom surfaces thereof.

The electronic circuit 72, which is installed on the substrate body 71, is electrically connected with the sensor module 4 through wires and the like (not shown). The electronic circuit 72 is thus configured to receive detection signals from the sensor module 4.

Further, the electronic circuit 72 is electrically connected with a later-described control circuit 11 of the RFID tag 10 through wires and the like (not shown). The electronic circuit 72 can thus be driven by an induced electromotive force generated by the RFID tag 10. Accordingly, the detection signals outputted by the sensor module 4 can be received without requiring any power source (e.g. a battery).

In addition, the detection signals received by the electronic circuit 72 can be wirelessly outputted to an outside through the RFID tag 10. For instance, by bringing an external device having an RFID reader function (e.g. a handy terminal and a smartphone) close to the cap member 6, the detection signals outputted by the sensor module 4 can be transmitted to the external device through the RFID tag 10.

Further, signals outputted by the external device can be transmitted to the electronic circuit 72 through the RFID tag 10. For instance, information such as zero adjustment setting inputted in the external device can be transmitted to the electronic circuit 72. Accordingly, the zero adjustment and the like of the electronic circuit 72 can be performed without directly operating an adjustment trimmer or the like of the electronic circuit 72.

### RFID Tag

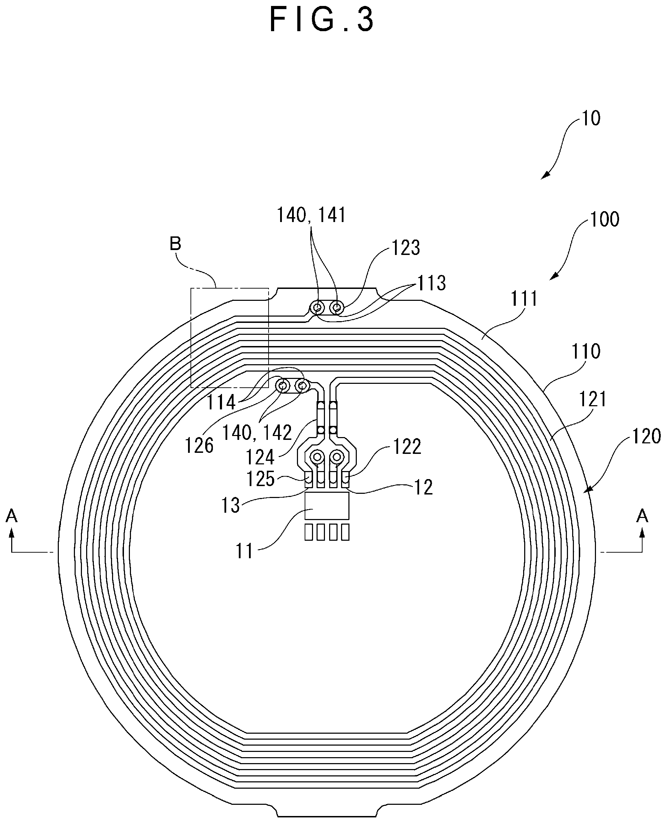

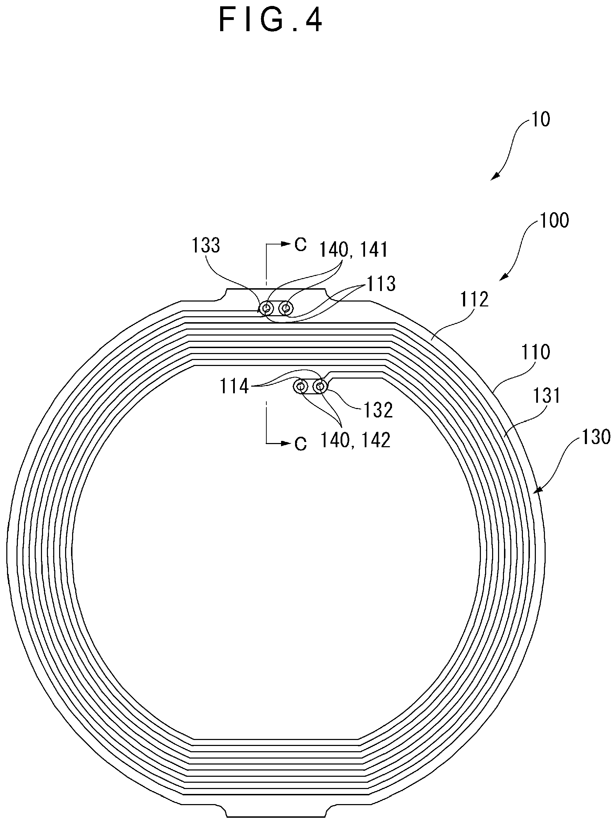

Fig. 3 is a plan view showing an outline of a first surface of the RFID tag 10. Fig. 4 is a plan view showing an outline of a second surface of the RFID tag 10.

As shown in Figs. 3 and 4, the RFID tag 10 includes the control circuit 11 and an RFID antenna 100.

The control circuit 11, which is a so-called integrated circuit, is provided on a later-described insulating substrate 110 of the RFID antenna 100. The control circuit 11 includes a first connection terminal 12 and a second connector terminal 13 which are installed on a later-described first surface 111 of the insulating substrate 110. In the present exemplary embodiment, the first connection terminal 12 and the second connector terminal 13 are formed through known photolithography/etching process of a metal (e.g. copper). It should however be noted that the first connection terminal 12 and the second connector terminal 13 are not necessarily configured as described above but are optionally provided by, for instance, soldering metallic terminals.

### RFID Antenna

The RFID antenna 100 includes the insulating substrate 110, a first antenna pattern 120, a second antenna pattern 130, and connecting portions 140.

The insulating substrate 110, which is an approximately disc-shaped insulating substrate, includes the first surface 111 and a second surface 112 opposite the first surface 111. The insulating substrate 110 is provided with a first through hole 113 and a second through hole 114 penetrating through the insulating substrate 110 from the first surface 111 to the second surface 112. It should be noted that the first surface 111 and the second surface 112 are examples of the first surface and the second surface of the invention, respectively.

Further, the insulating substrate 110, which is not necessarily approximately disc-shaped, is optionally in a form of, for instance, a polygonal (e.g. hexagonal or octagonal) plate.

### First Antenna Pattern and Second Antenna Pattern

The first antenna pattern 120 is in a form of a spiral coil provided on the first surface 111 of the insulating substrate 110. Similarly, the second antenna pattern 130 is in a form of a spiral coil provided on the second surface 112 of the insulating substrate 110.

In the present exemplary embodiment, the first antenna pattern 120 and the second antenna pattern 130 are formed by laminating metal (e.g. copper) layers on the first surface 111 and the second surface 112 of the insulating substrate 110 and performing photolithography/etching on the metal layers. It should be noted that the first antenna pattern 120 and the second antenna pattern 130 are not necessarily configured as described above but are optionally provided by, for instance, attaching metallic coils on the first surface 111 and the second surface 112 of the insulating substrate 110.

### First Antenna Pattern

As shown in Fig. 3, the first antenna pattern 120 includes a first antenna portion 121, a first inner end 122, and a first outer end portion 123.

The first antenna portion 121 is a coil portion in a form of a spiral. Details of the first antenna portion 121 will be described later.

It should be noted that the first antenna pattern 120, which has five turns of the spiral in Fig. 3, is not necessarily configured as shown in Fig. 3 but optionally has six turns or more or, alternatively, four turns or less.

The first inner end portion 122, which is an inner end of the spiral of the first antenna portion 121, is connected to the first connection terminal 12 of the control circuit 11. The first antenna pattern 120 is thus electrically connected with the control circuit 11.

The first outer end portion 123, which is a so-called connector terminal provided at an outer end of the spiral of the first antenna portion 121, is located at a position corresponding to the first through hole 113 of the insulating substrate 110. As described later, the first outer end portion 123 is connected with a second outer end portion 133 of the second antenna pattern 130.

The first antenna pattern 120 further includes a connector antenna portion 124. The connector antenna portion 124 is provided with a first connector antenna terminal 125 and a second connector antenna terminal 126 at a first end and a second end, respectively.

The first connector antenna terminal 125 is electrically connected with the second connector terminal 13 of the control circuit 11. The second connector antenna terminal 126 is provided at a position corresponding to the second through hole 114. As described later, the second connector antenna terminal 126 is connected with a second inner end portion 132 of the second antenna pattern 130.

### Second Antenna Pattern

As shown in Fig. 4, the second antenna pattern 130 includes a second antenna portion 131, the second inner end portion 132, and the second outer end portion 133.

The second antenna portion 131 is a coil portion in a form of a spiral. Details of the second antenna portion 131 will be described later.

It should be noted that the second antenna pattern 130, which has five turns of the spiral in Fig. 4, is not necessarily configured as shown in Fig. 4 but optionally has six turns or more or, alternatively, four turns or less.

The second inner end portion 132, which is a so-called connector terminal provided at an inner end of the spiral of the second antenna portion 131, is located at a position corresponding to the second through hole 114.

The second outer end portion 133, which is a so-called connector terminal provided at an outer end of the spiral of the second antenna portion 131, is located at a position corresponding to the first through hole 113 of the insulating substrate 110.

### Connecting Portion

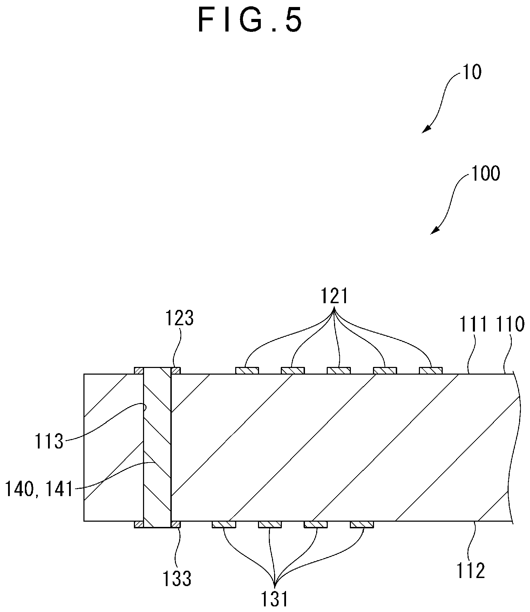

Fig. 5 is a cross-sectional view schematically showing the RFID tag 10, taken along C-C line in Fig. 4.

As shown in Figs. 3 to 5, the connecting portions 140 include a first connecting portion 141 and a second connecting portion 142.

The first connecting portion 141 is disposed inside the first through hole 113. In the present exemplary embodiment, the first connecting portion 141 is provided by copper-plating the inner surface of the first through hole 113 and filling the inside of the hole with an electrical conductor (e.g. electrically conductive resin). The first outer end portion 123 of the first antenna pattern 120 is electrically connected with the second outer end portion 133 of the second antenna pattern 130 through the first connecting portion 141. In the present exemplary embodiment, the outer end portions 123, 133 of the first antenna pattern 120 and the second antenna pattern 130 are connected, so that the length of the first connecting portion 141 can be reduced.

It should be noted that the first connecting portion 141 is not necessarily configured as described above but is optionally provided, for instance, by installing a wire (e.g. copper wire) in the first through hole 113.

The second connecting portion 142 is disposed inside the second through hole 114. In the present exemplary embodiment, as in the first connecting portion 141, the second connecting portion 142 is provided by copper-plating the inner surface of the second through hole 114 and filling the inside of the hole with an electrical conductor (e.g. electrically conductive resin). The second connector antenna terminal 126 of the first antenna pattern 120 is electrically connected with the second inner end portion 132 of the second antenna pattern 130 through the second connecting portion 142. The first antenna pattern 120, the second antenna pattern 130, and the control circuit 11 are thus electrically connected to form a closed circuit.

### First Antenna Portion and Second Antenna Portion

As shown in Fig. 3, the spiral pattern of the first antenna portion 121 is a clockwise spiral from an inside to an outside in a plan view seen from the first surface 111 of the insulating substrate 110.

In contrast, as shown in Fig. 4, the spiral pattern of the second antenna portion 131 is a counterclockwise spiral from an outside to an inside in a plan view seen from the second surface 112 of the insulating substrate 110. In other words, the spiral pattern of the second antenna portion 131 is a clockwise spiral from an outside to an inside as seen through from the first surface 111 to the second surface 112 of the insulating substrate 110. Accordingly, the first antenna pattern 120 and the second antenna pattern 130 are formed to have the same spiral rotation direction when tracing along a connection route from the first antenna pattern 120 to the second antenna pattern 130.

Specifically, as tracing along the connection route from the first connection terminal 12 of the control circuit 11, the spiral pattern of the first antenna portion 121 shows a clockwise rotation from the inside to the outside in the plan view seen from the first surface 111 of the insulating substrate 110. The first antenna portion 121 is connected to the second antenna portion 131 through the first outer end portion 123, the first connecting portion 141, and the second outer end portion 133. The spiral pattern of the second antenna portion 131 shows a clockwise rotation from an outside to an inside as seen through from the first surface 111 to the second surface 112 of the insulating substrate 110.

Accordingly, the electric currents which are generated when a magnetic field in a predetermined direction is received by the first antenna pattern 120 and the second antenna pattern 130 flow in the same direction, in the plan view seen from the first surface 111.

For instance, when the electric current is generated from the inside to the outside in the first antenna pattern 120, the electric current flows clockwise in the plan view seen from the first surface 111. At this time, since the electric current flows from the outside to the inside in the second antenna pattern 130 along the connection route with the first antenna pattern 120, the electric current flows clockwise in the plan view seen from the first surface 111. In other words, the electric current flows in the same direction in the first antenna pattern 120 and the second antenna pattern 130. Accordingly, the electric current flowing in the first antenna pattern 120 and the electric current flowing in the second antenna pattern 130 are not mutually cancelled.

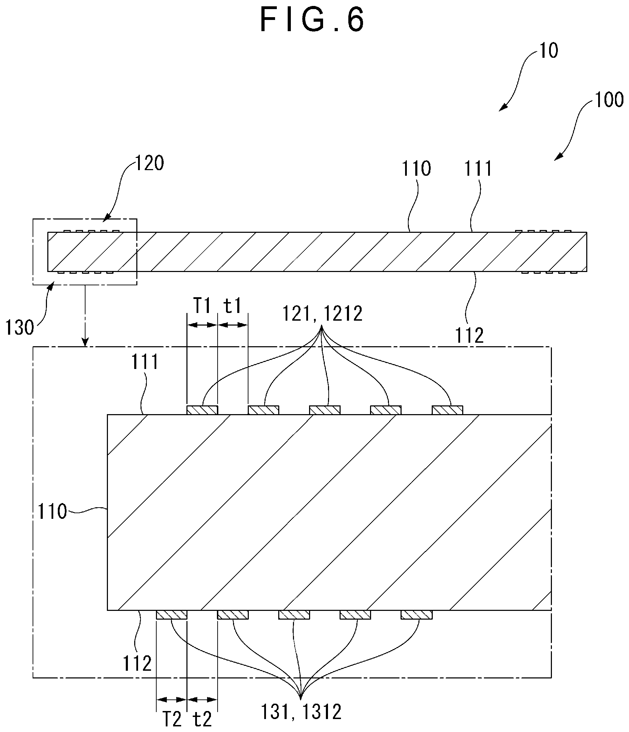

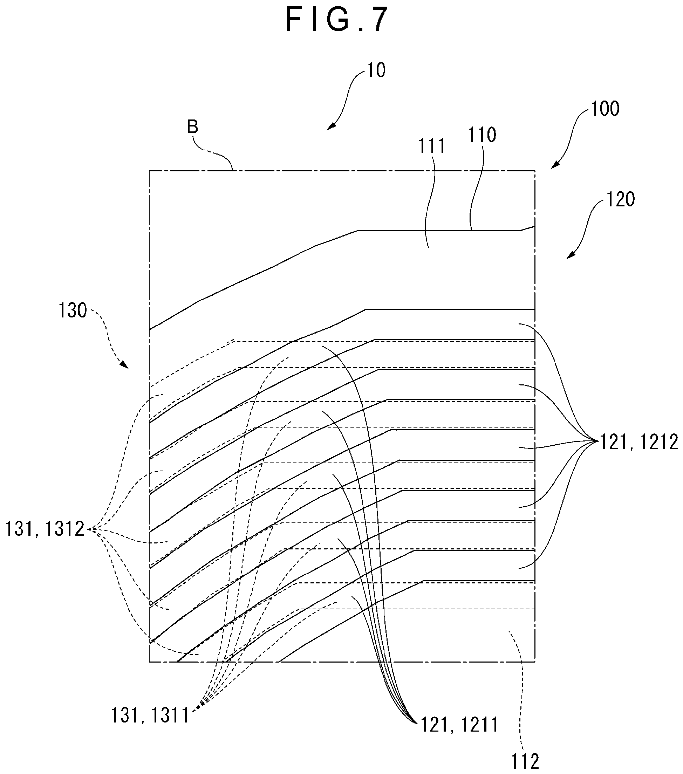

Fig. 6 is a cross-sectional view schematically showing the RFID tag 10 taken along A-A line in Fig. 3. Fig. 7 is a plan view showing a B area in Fig. 3 in an enlarged manner. It should be noted that the second antenna portion 131 when the RFID tag 10 is seen from the first surface 111 is shown in broken lines in Fig. 7.

As shown in Figs. 6 and 7, in the plan view of the first surface 111 of the insulating substrate 110 with the second surface 112 being seen through the first surface 111, the first antenna portion 121 includes first crossover portions 1211 disposed at positions intersecting the second antenna portion 131 and first main antenna portions 1212 disposed at positions not overlapped with the second antenna portion 131.

Similarly, in the plan view of the first surface 111 of the insulating substrate 110 with the second surface 112 being seen through the first surface 111, the second antenna portion 131 includes second crossover portions 1311 disposed at positions intersecting the first antenna portion 121 and second main antenna portions 1312 disposed at positions not overlapped with the first antenna portion 121.

As shown in Fig. 7, the first crossover portions 1211 and the second crossover portions 1311 are arranged along a radial direction of the spiral in the present exemplary embodiment.

In the present exemplary embodiment, by thus providing the crossover portions 1211, 1311, the first antenna pattern 120 and the second antenna pattern 130 can be arranged so that the electric currents, which are generated in the first antenna pattern 120 and the second antenna pattern 130 when the magnetic field of a predetermined direction is received by the first antenna pattern 120 and the second antenna pattern 130, flow in the same direction, as described above.

Further, as shown in Fig. 6, a width of the first antenna portion 121 in the radial direction is denoted by T1 and a pitch in the radial direction is denoted by t1. In the present exemplary embodiment, t1 is slightly larger than T1. In other words, the first antenna portion 121 is arranged at the pitch t1 larger than the width T1 in the radial direction.

Similarly, a width of the second antenna portion 131 in the radial direction is denoted by T2 and a pitch in the radial direction is denoted by t2. In the present exemplary embodiment, t2 is slightly larger than T2. In other words, the second antenna portion 131 is arranged at the pitch t2 larger than the width T2 in the radial direction as in the first antenna portion 121.

In the present exemplary embodiment, the first antenna portion 121 and the second antenna portion 131 are formed to have the same widths T1, T2 in the radial direction. Further, the first antenna portion 121 and the second antenna portion 131 are arranged to have the same pitches t1, t2 in the radial direction. It should be noted that the first antenna portion 121 and the second antenna portion 131, which are not necessarily configured as described above, optionally have different widths T1 and T2 and/or different pitches t1 and t2.

As described above, in the present exemplary embodiment, the first antenna portion 121 and the second antenna portion 131 are located in a manner to be not overlapped with each other in a plan view except for the crossover portions 1211, 1311. Accordingly, the antenna area per a unit area can be enlarged.

The following advantages can be achieved by the above-described first exemplary embodiment.
(1) In the present exemplary embodiment, the first antenna pattern 120 and the second antenna pattern 130 provided on respective sides of the insulating substrate 110 are located at positions for the main antenna portions 1212, 1312 not to be overlapped in the plan view of the first surface 111 of the insulating substrate 110 with the second surface 112 being seen through from the first surface 111. Accordingly, the antenna area per a unit area can be increased. Accordingly, desired communication performance can be achieved and the size of the RFID antenna 100 can be reduced.

Further, since the antenna patterns 120, 130 in a form of coils are provided on the top and bottom surfaces of the insulating substrate 110, the length of the antenna pattern can be increased as compared with an antenna pattern provided only on one side of the insulating substrate 110. Accordingly, the inductance and, consequently, induced electromotive force can be increased.
(2) In the present exemplary embodiment, the first antenna pattern 120 has the spiral pattern extending from an inside to an outside and the second antenna pattern 130 has the spiral pattern extending from the outside to the inside. The outer end portions 123, 133 of the first antenna pattern 120 and the second antenna pattern 130 are electrically connected through the first connecting portion 141 disposed inside the first through hole 113. Accordingly, the first connecting portion 141 connecting the outer end portions 123, 133 of the first antenna pattern 120 and the second antenna pattern 130 can be shortened. The loss of the electric current in the first connecting portion 141 can thus be reduced and the first connecting portion 141 can be easily installed during a manufacturing process.

Further, the first antenna pattern 120 and the second antenna pattern 130 include the crossover portion 1211 and the crossover portion 1311, respectively. Accordingly, in the plan view of the first surface 111 of the insulating substrate 110 with the second surface 112 being seen through the first surface 111, the first antenna pattern 120 and the second antenna pattern 130 have the same rotation direction of the spiral when the first antenna pattern 120 and the second antenna pattern 130 are traced along the connection route thereof. Accordingly, the electric currents, which are generated in the first antenna pattern 120 and the second antenna pattern 130 when the first antenna pattern 120 and the second antenna pattern 130 receive a magnetic field in a predetermined direction, flow in the same direction, so that the electric currents flowing in the first antenna pattern 120 and the second antenna pattern 130 are prevented from being mutually cancelled.
(3) According to the present exemplary embodiment, the electronic circuit 72 can be driven by the induced electromotive force generated by the RFID tag 10. Accordingly, the detection signals outputted by the sensor module 4 can be received by the electronic circuit 72 without requiring any power source (e.g. a battery).

In addition, the detection signals received by the electronic circuit 72, which is electrically connected to the RFID tag 10, can be wirelessly outputted to an outside through the RFID tag 10. Accordingly, wires for outputting the detection signals to an outside are not required.

### Second Exemplary Embodiment

Next, a second exemplary embodiment of the invention will be described below with reference to the attached drawings.

An RFID tag 10A according to the second exemplary embodiment is different from the RFID tag in the first exemplary embodiment in that a spiral pattern of a second antenna pattern 130A is counterclockwise from an inside to an outside.

### RFID Antenna

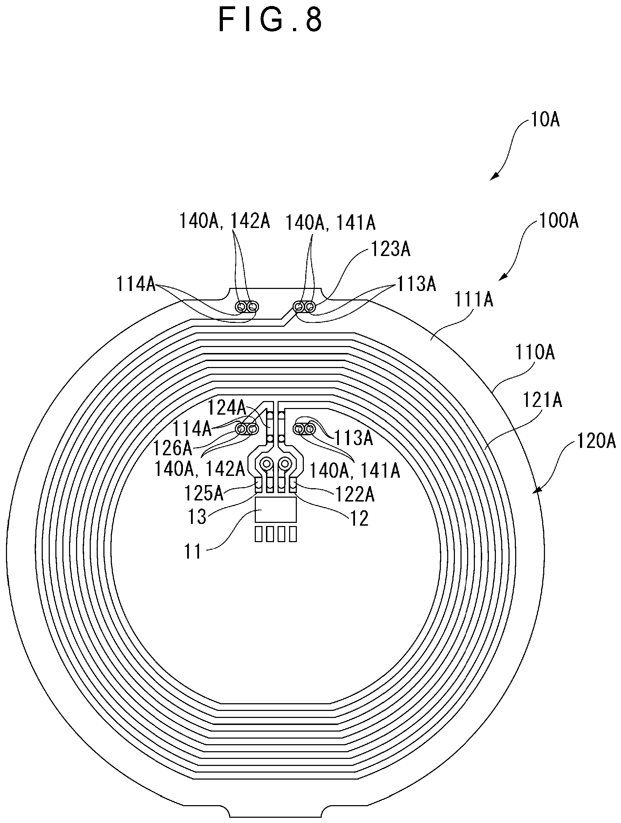

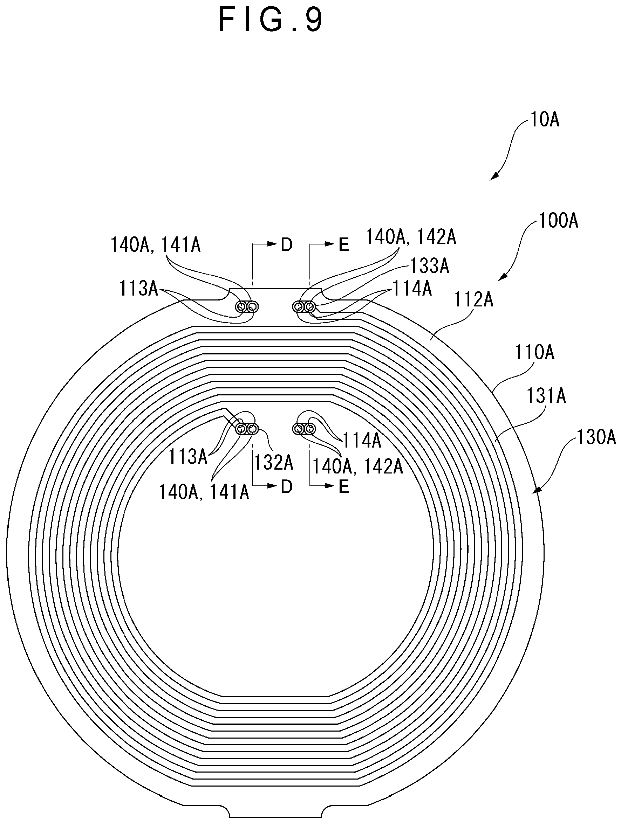

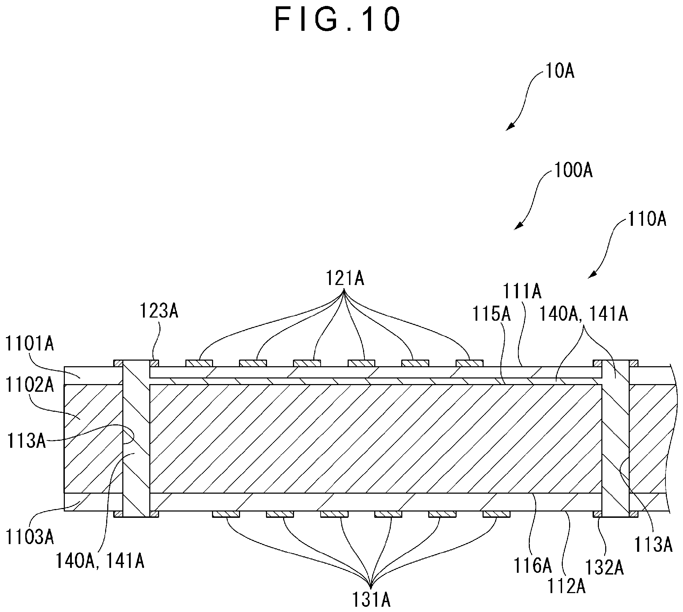

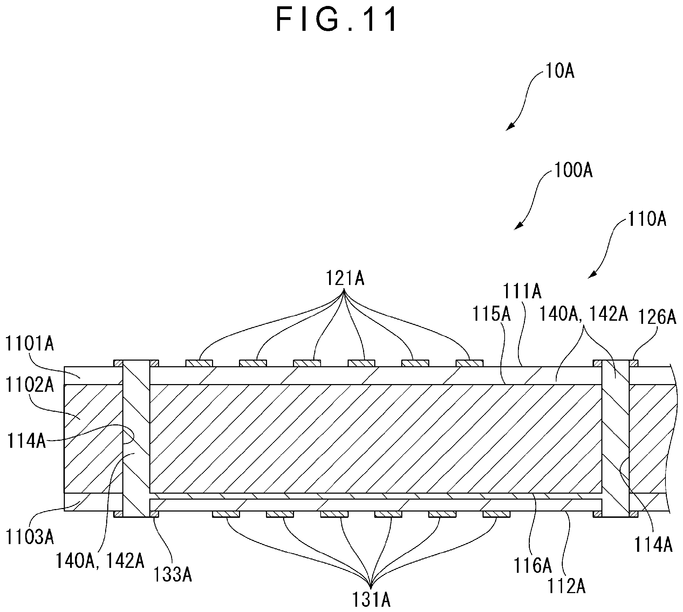

Fig. 8 is a plan view showing an outline of a first surface of the RFID tag 10A according to the second exemplary embodiment. Fig. 9 is a plan view showing an outline of a second surface of the RFID tag 10A. Further, Fig. 10 is a cross-sectional view schematically showing the RFID tag 10A taken along a D-D line in Fig. 9. Fig. 11 is a cross-sectional view schematically showing the RFID tag 10A taken along an E-E line in Fig. 9.

As shown in Figs. 8 to 11, the RFID antenna 100A includes an insulating substrate 110A, a first antenna pattern 120A, the second antenna pattern 130A, and connecting portions 140A. As in the above-described first exemplary embodiment, the first antenna pattern 120A includes a first antenna portion 121A, a first inner end portion 122A, a first outer end portion 123A, a connector antenna portion 124A, a first connector antenna terminal 125A, and a second connector antenna terminal 126A. In the present exemplary embodiment, the first antenna pattern 120A has six turns of a spiral.

As shown in Fig. 9, the second antenna pattern 130A includes a second antenna portion 131A, a second inner end portion 132A, and a second outer end portion 133A. In the present exemplary embodiment, the second antenna pattern 130A has seven turns of the spiral.

In the present exemplary embodiment, the spiral pattern of the second antenna portion 131A of the second antenna pattern 130A is counterclockwise from an inside to an outside in a plan view seen from the second surface 112A of the insulating substrate 110A. As described later, the second inner end portion 132A of the second antenna pattern 130A is connected with the first outer end portion 123A of the first antenna pattern 120A in the present exemplary embodiment. Accordingly, the first antenna pattern 120A and the second antenna pattern 130A have the same rotation direction of the spiral when traced from the first antenna pattern 120A to the second antenna pattern 130A along the connection route. The electric currents, which are generated in the first antenna pattern 120A and the second antenna pattern 130A when the first antenna pattern 120A and the second antenna pattern 130A receive a magnetic field in a predetermined direction, thus flow in the same direction as in the above-described first exemplary embodiment. Accordingly, the electric currents flowing in the first antenna pattern 120A and the second antenna pattern 130A are prevented from being mutually cancelled.

As shown in Figs. 10 and 11, the insulating substrate 110A in the present exemplary embodiment is a three-layer component including a first layer 1101A, a second layer 1102A, and a third layer 1103A. The second layer 1102A has a third surface 115A and a fourth surface 116A facing the first layer 1101A and the third layer 1103A, respectively.

Further, as shown in Fig. 10, the first through hole 113A in the present exemplary embodiment is bored at two points in inner and outer parts of the insulating substrate 110A. Specifically, the first through hole 113A is provided at a point corresponding to the first outer end portion 123A of the first antenna pattern 120A and a point corresponding to the second inner end portion 132A of the second antenna pattern 130A. The first connecting portion 141A is disposed inside each of the two first through holes 113A. The first connecting portion 141A is further disposed on the third surface 115A of the second layer 1102A to connect the two first through holes 113A. The first outer end portion 123A of the first antenna pattern 120A is thus connected with the second inner end portion 132A of the second antenna pattern 130A in the present exemplary embodiment, as described above.

Further, as shown in Fig. 11, the second through hole 114A in the present exemplary embodiment is bored at two points in inner and outer parts of the insulating substrate 110A. Specifically, the second through hole 114A is provided at a point corresponding to the second connector antenna terminal 126A of the first antenna pattern 120A and a point corresponding to the second outer end portion 133A of the second antenna pattern 130A. The second connecting portion 142A is disposed inside each of the two second through holes 114A. The second connecting portion 142A is further disposed on the fourth surface 116A of the second layer 1102A to connect the two second through holes 114A. The second antenna pattern 130A is thus electrically connected to the control circuit 11 through the second outer end portion 133A, the second connecting portion 142A, and the connector antenna portion 124A. Accordingly, as in the above-described first exemplary embodiment, the first antenna pattern 120A, the second antenna pattern 130A, and the control circuit 11 are electrically connected to form a closed circuit.

The following advantage can be achieved by the above-described second exemplary embodiment.
(4) In the present exemplary embodiment, the first antenna pattern 120A and the second antenna pattern 130A have the spiral pattern extending from the inside to the outside. The first outer end portion 123A of the first antenna pattern 120A is electrically connected with the second inner end portion 132A of the second antenna pattern 130A through the connecting portion 140A. Accordingly, the first antenna pattern 120A and the second antenna pattern 130A have the same spiral direction from the center in addition to the same rotation direction in the plan view of the first surface 111 with the second surface 112A being seen through the first surface 111A. Further, the first antenna pattern 120A and the second antenna pattern 130A do not intersect with each other. Accordingly, the first antenna pattern 120A and the second antenna pattern 130A, which are not overlapped on the entire surface, can provide an enlarged antenna area. Further, the electric currents generated in the first antenna pattern 120A and the second antenna pattern 130A flow in the same direction, thereby preventing the cancellation of the electric currents flowing in the first antenna pattern 120A and the second antenna pattern 130A.

### Third Exemplary Embodiment

Next, a third exemplary embodiment of the invention will be described below with reference to the attached drawings.

An RFID tag 20B according to the third exemplary embodiment is different from the RFID tags in the first and second exemplary embodiments in that the RFID tag 20B includes two laminated insulating substrates 210B, 220B and an insulation layer 270B interposed between the two insulating substrates 210B, 220B.

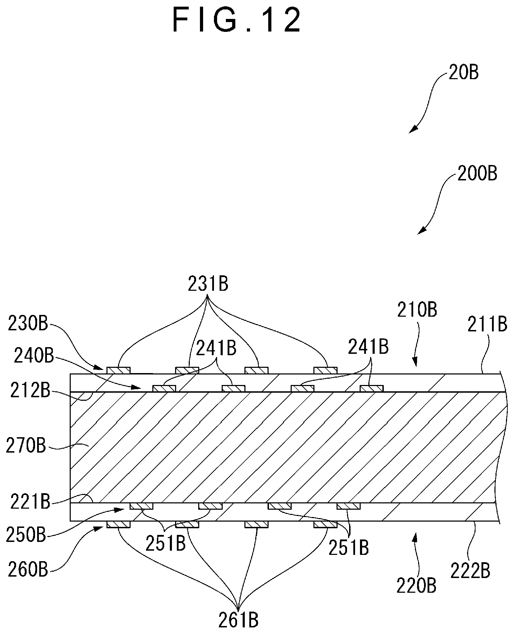

Fig. 12 is a cross-sectional view schematically showing the RFID tag 20B according to the third exemplary embodiment.

As shown in Fig. 12, an RFID antenna 200B of the RFID tag 20B includes the first insulating substrate 210B, the second insulating substrate 220B, and the insulation layer 270B interposed between the first insulating substrate 210B and the second insulating substrate 220B. The first insulating substrate 210B and the second insulating substrate 220B define an example of a plurality of layered insulating substrates.

The first insulating substrate 210B has a first surface 211B and a second surface 212B. A first antenna pattern 230B and a second antenna pattern 240B are provided on the first surface 211B and the second surface 212B of the first insulating substrate 210B, respectively.

The first antenna pattern 230B and the second antenna pattern 240B include a first antenna portion 231B and a second antenna portion 241B, respectively.

The second insulating substrate 220B has a third surface 221B and a fourth surface 222B. A third antenna pattern 250B and a fourth antenna pattern 260B are provided on the third surface 221B and the fourth surface 222B of the second insulating substrate 220B, respectively.

The third antenna pattern 250B and the fourth antenna pattern 260B include a third antenna portion 251B and a fourth antenna portion 261B, respectively.

It should be noted that the first antenna pattern 230B, the second antenna pattern 240B, the third antenna pattern 250B, and the fourth antenna pattern 260B are electrically connected through connecting portions (not shown).

As shown in Fig. 12, the first antenna portion 231B and the second antenna portion 241B are located at positions not overlapping with each other in a direction orthogonal to the first surface 211B. Specifically, in a plan view seen from the first surface 211B, the first antenna portion 231B and the second antenna portion 241B have respective main antenna portions arranged at the positions not overlapping with each other.

Similarly, the third antenna portion 251B and the fourth antenna portion 261B are located at positions not overlapping with each other in a direction orthogonal to the fourth surface 222B. Specifically, in a plan view seen from the fourth surface 222B, the third antenna portion 251B and the fourth antenna portion 261B have respective main antenna portions arranged at the positions not overlapping with each other.

The following advantage can be achieved by the above-described third exemplary embodiment.
(5) In the present exemplary embodiment, the antenna pattern can be provided on both surfaces of each of the layered two insulating substrates 210B, 220B. Accordingly, the length of the antenna patterns in a form of coils can be increased to increase the inductance and, consequently, the induced electromotive force.

It should be noted that the present invention is not limited to the above-described embodiments but includes modifications and improvements, which are within the scope of the invention as defined in the appended claims and can achieve the object of the invention as described above.

The first antenna pattern 120 and the second antenna pattern 130, which have the same number of turns of the spiral in the first exemplary embodiment, are not necessarily configured as in the first exemplary embodiment but optionally have different numbers of turns of the spiral between the first antenna pattern and the second antenna pattern.

The first antenna patterns 120, 120A and the second antenna patterns 130, 130A, which are connected through the connecting portions 140, 140A disposed in the first through holes 113, 113A in the first and second exemplary embodiments, respectively, are not necessarily configured as in the exemplary embodiments. For instance, the first antenna pattern and the second antenna pattern are connected through a wire extending between the first surface and the second surface on the outer edge of the insulating substrate in some embodiments.

The pitch t1 in the radial direction for arranging the first antenna portion 121, which is slightly larger than the width T1 of the first antenna portion 121 in the radial direction in the first exemplary embodiment, is not necessarily configured as in the first exemplary embodiment. For instance, t1 and T1 are the same in some embodiments. Alternatively, T1 is optionally larger than t1. In this case, the first main antenna portions 1212 and the second main antenna portions 1312 are optionally partially overlapped in a plan view.

Similarly, the pitch t2 in the radial direction for arranging the second antenna portion 131, which is slightly larger than the width T2 of the second antenna portion 131 in the radial direction, is not necessarily configured as described in the exemplary embodiment. For instance, t2 and T2 are the same in some embodiments. Alternatively, T2 is optionally larger than t2. In this case, the first main antenna portions 1212 and the second main antenna portions 1312 are optionally partially overlapped in a plan view. Further, the first antenna portion 121A and the second antenna portion 131A are optionally configured as described above in the second exemplary embodiment.

The RFID tag 20B, which is exemplarily provided with the layered two insulating substrates 210B, 220B in the third exemplary embodiment, is not necessarily configured as in the third exemplary embodiment. For instance, the RFID tag is provided with layered three or more insulating substrates in some embodiments.

The cylindrical case 2 and the joint 3, which are in a form of metallic components in the above-described exemplary embodiments, are not necessarily metallic components but are made of synthetic resin(s) in some embodiments.

The tool engagement portion 24, which is provided to the cylindrical case 2 in the above-described exemplary embodiments, is not necessarily provided to the cylindrical case 2 but is provided to the joint in some embodiments.

The physical quantity measuring device 1, which is configured to measure a pressure of the measurement target fluid in the exemplary embodiments, is configured to measure differential pressure in some embodiments.

### EXPLANATION OF CODES

1...physical quantity measuring device, 2...cylindrical case, 3...joint, 4...sensor module, 5...guide member, 6...cap member, 7...circuit board, 8...first sealing member, 9...second sealing member, 10, 10A, 20B...RFID tag, 11...control circuit, 12...first connection terminal, 13...second connector terminal, 21...circumferential portion, 22...first opening, 23...second opening, 24...tool engagement portion, 31...introduction port, 32...male thread, 41...cylindrical portion, 42...diaphragm, 51...first sealing member attachment groove, 52...RFID tag attachment portion, 61...second sealing member attachment groove, 71...substrate body, 72...electronic circuit, 100, 100A, 200B...RFID antenna, 110, 110A, 210B, 220B...insulating substrate, 111...first surface, 112...second surface, 113, 113A...first through hole, 114, 114A...second through hole, 120, 120A, 230B...first antenna pattern, 121, 121A, 231B...first antenna portion, 122, 122A...first inner end portion, 123, 123A...first outer end portion, 124, 124A...connector antenna portion, 130, 130A, 240B...second antenna pattern, 131, 131A, 241B...second antenna portion, 132, 132A...second inner end portion, 133, 133A...second outer end portion, 140, 140A...connecting portion, 141, 141A...first connecting portion, 142, 142A...second connecting portion, 1211...first crossover portion, 1212... first main antenna portion, 1311...second crossover portion, 1312...second main antenna portion

## Claims

1. A physical quantity measuring device (1) comprising:
an RFID tag (10; 10A; 20B) that comprises an RFID antenna (100; 100A; 200B) and a control circuit (11),
the RFID antenna (100; 100A; 200B) comprising: an insulating substrate (110; 110A; 210B, 220B), the control circuit (11) being provided on the insulating substrate (110; 110A; 210B, 220B); a first antenna pattern (120; 120A; 230B) in a form of a first spiral coil, the first antenna pattern (120; 120A; 230B) being provided on a first surface (111; 111A; 211B) of the insulating substrate (110; 110A; 210B); and a second antenna pattern (130; 130A; 240B) in a form of a second spiral coil, the second antenna pattern (130; 130A; 240B) being provided on a second surface (112; 112A; 212B) of the insulating substrate (110; 110A; 220B) and electrically connected with the first antenna pattern (120;120A; 230B), wherein
the first antenna pattern (120; 120A; 230B) and the second antenna pattern (130; 130A; 240B) respectively comprise a first main antenna portion (1212) and a second main antenna portion (1312), the first main antenna portion (1212) and the second main antenna portion (1312) being disposed at positions for the first antenna pattern (120; 120A; 230B) and the second antenna pattern (130; 130A; 240B) not being overlapped in a plan view of the first surface (111; 111A; 211B) with the second surface (112; 112A; 212B) being seen through the first surface (111; 111A; 211B);
a cylindrical case (2);
a cylindrical guide member (5) made of a resin, the guide member (5) being disposed in an opening (23) of the case (2), wherein an inner surface of the guide member (5) is provided with an RFID tag attachment portion (52) on which the RFID tag (10; 10A; 20B) is attached;
a sensor module (4) housed in the case (2) and configured to detect a pressure of a measurement target fluid; and
an electronic circuit (72) configured to receive a detection signal outputted by the sensor module (4) and electrically connected with the RFID tag (10; 10A;20B).

2. The physical quantity measuring device according to claim 1, wherein
the first antenna pattern (120) and the second antenna pattern (130) respectively comprise a first spiral pattern (120) and a second spiral pattern (130), one of the first spiral pattern (120) and the second spiral pattern (130) extending from an inside to an outside and the other of the first spiral pattern (120) and the second spiral pattern (130) extending from the outside to the inside,
the RFID antenna (100) comprises a connecting portion (141) disposed in a through hole (113) provided in the insulating substrate (110), the connecting portion (141) electrically connecting an outer end portion (123) of the first antenna pattern (120) and an outer end portion (133) of the second antenna pattern (130), and
the first antenna pattern (120) and the second antenna pattern (130) each comprise a crossover portion (1211, 1311), the crossover portion (1211, 1311) being disposed at a position for the first antenna pattern (120) and the second antenna pattern (130) to be intersected in the plan view of the first surface (111) with the second surface (112) being seen through the first surface (111).

3. The physical quantity measuring device according to claim 1, wherein
the first antenna pattern (120A) and the second antenna pattern (130A) respectively comprise a first spiral pattern (120A) and a second spiral pattern (130A), the first spiral pattern (120A) and the second spiral pattern (130A) extending from an inside to an outside, and
the **RFID** antenna (100A) comprises a connecting portion (141A) disposed in a through hole (113A) provided in the insulating substrate (110A), the connecting portion (141A) electrically connecting an outer end portion (123A) of the first antenna pattern (120A) and an inner end portion (132A) of the second antenna pattern (130A).

4. The physical quantity measuring device according to any one of claims 1 to 3, wherein
the insulating substrate comprises a plurality of layered insulating substrates (210B, 220B), and
the RFID antenna (200B) comprises an insulation layer (270B) interposed between the plurality of layered insulating substrates (210B, 220B).

## Patentansprüche

1. Messgerät für physikalische Größen (1), umfassend:
einem RFID-Tag (10; 10A; 20B), der eine RFID-Antenne (100; 100A; 200B) und eine Steuerschaltung (11) umfasst,
wobei die RFID-Antenne (100; 100A; 200B) umfasst: ein isolierendes Substrat (110; 110A; 210B, 220B), wobei die Steuerschaltung (11) auf dem isolierenden Substrat (110; 110A; 210B, 220B) bereitgestellt ist; ein erstes Antennenmuster (120; 120A; 230B) in Form einer ersten Spiralspule, wobei das erste Antennenmuster (120; 120A; 230B) auf einer ersten Oberfläche (111; 111A; 211B) des isolierenden Substrats (110; 110A; 210B) bereitgestellt ist; und ein zweites Antennenmuster (130; 130A; 240B) in Form einer zweiten Spiralspule, wobei das zweite Antennenmuster (130; 130A; 240B) auf einer zweiten Oberfläche (112; 112A; 212B) des isolierenden Substrats (110; 110A; 220B) bereitgestellt und elektrisch mit dem ersten Antennenmuster (120; 120A; 230B) verbunden ist, wobei
das erste Antennenmuster (120; 120A; 230B) und das zweite Antennenmuster (130; 130A; 240B) jeweils einen ersten Hauptantennenabschnitt (1212) und einen zweiten Hauptantennenabschnitt (1312) aufweisen, wobei der erste Hauptantennenabschnitt (1212) und der zweite Hauptantennenabschnitt (1312) an Positionen für das erste Antennenmuster (120; 120A; 230B) und für das zweite Antennenmuster (130; 130A; 240B) angeordnet sind, die sich in einer Draufsicht auf die erste Fläche (111; 111A; 211B) nicht überlappen, wobei die zweite Fläche (112; 112A; 212B) durch die erste Fläche (111; 111A; 211B) hindurch zu sehen ist;
ein zylindrisches Gehäuse (2);
ein zylindrisches Führungselement (5) aus einem Harz, wobei das Führungselement (5) in einer Öffnung (23) des Gehäuses (2) angeordnet ist, wobei eine Innenfläche des Führungselements (5) mit einem RFID-Tag-Befestigungsabschnitt (52) versehen ist, auf dem der RFID-Tag (10; 10A; 20B) angebracht ist;
ein Sensormodul (4), das in dem Gehäuse (2) untergebracht und so konfiguriert ist, dass es einen Druck einer Messzielflüssigkeit erfasst; und
eine elektronische Schaltung (72), die so konfiguriert ist, dass sie ein von dem Sensormodul (4) ausgegebenes Erfassungssignal empfängt, und elektrisch mit dem RFID-Tag (10; 10A; 20B) verbunden ist.

2. Messgerät für physikalische Größen nach Anspruch 1, wobei
das erste Antennenmuster (120) und das zweite Antennenmuster (130) ein erstes Spiralmuster (120) bzw. ein zweites Spiralmuster (130) aufweisen, wobei sich eines des ersten Spiralmusters (120) und des zweiten Spiralmusters (130) von innen nach außen erstreckt und das andere des ersten Spiralmusters (120) und des zweiten Spiralmusters (130) von außen nach innen erstreckt,
die RFID-Antenne (100) einen Verbindungsabschnitt (141) aufweist, der in einem in dem isolierenden Substrat (110) vorgesehenen Durchgangsloch (113) angeordnet ist, wobei der Verbindungsabschnitt (141) einen äußeren Endabschnitt (123) des ersten Antennenmusters (120) und einen äußeren Endabschnitt (133) des zweiten Antennenmusters (130) elektrisch verbindet, und
das erste Antennenmuster (120) und das zweite Antennenmuster (130) jeweils einen Kreuzungsabschnitt (1211, 1311) aufweisen, wobei der Kreuzungsabschnitt (1211, 1311) an einer Position angeordnet ist, an der sich das erste Antennenmuster (120) und das zweite Antennenmuster (130) in der Draufsicht auf die erste Oberfläche (111) schneiden sollen, wenn die zweite Oberfläche (112) durch die erste Oberfläche (111) gesehen wird.

3. Messgerät für physikalische Größen nach Anspruch 1, wobei
das erste Antennenmuster (120A) und das zweite Antennenmuster (130A) ein erstes Spiralmuster (120A) bzw. ein zweites Spiralmuster (130A) aufweisen, wobei sich das erste Spiralmuster (120A) und das zweite Spiralmuster (130A) von innen nach außen erstrecken, und
die RFID-Antenne (100A) einen Verbindungsabschnitt (141A) aufweist, der in einem in dem isolierenden Substrat (110A) vorgesehenen Durchgangsloch (113A) angeordnet ist, wobei der Verbindungsabschnitt (141A) einen äußeren Endabschnitt (123A) des ersten Antennenmusters (120A) und einen inneren Endabschnitt (132A) des zweiten Antennenmusters (130A) elektrisch verbindet.

4. Messgerät für physikalische Größen nach einem der Ansprüche 1 bis 3, wobei
das isolierende Substrat mehrere geschichtete isolierende Substrate (210B, 220B) aufweist, und
die RFID-Antenne (200B) eine Isolationsschicht (270B) aufweist, die zwischen den mehreren geschichteten isolierenden Substraten (210B, 220B) angeordnet ist.

## Revendications

1. Dispositif de mesure de grandeur physique (1), comprenant :
une étiquette RFID (10 ; 10A ; 20B) qui comprend une antenne RFID (100 ; 100A ; 200B) et un circuit de commande (11),
l'antenne RFID (100 ; 100A ; 200B) comprenant : un substrat isolant (110 ; 110A ; 210B ; 220B), le circuit de commande (11) étant disposé sur le substrat isolant (110 ; 110A ; 210B ; 220B) ; un premier motif d'antenne (120 ; 120A ; 230B) sous forme d'une première bobine spiralée, le premier motif d'antenne (120 ; 120A ; 230B) étant disposé sur une première surface (111 ; 111A ; 211B) du substrat isolant (110 ; 110A ; 210B) ; et un deuxième motif d'antenne (130 ; 130A ; 240B) sous forme d'une deuxième bobine spiralée, le deuxième motif d'antenne (130 ; 130A ; 240B) étant disposé sur une deuxième surface (112 ; 112A ; 212B) du substrat isolant (110 ; 110A ; 220B) et connecté électriquement au premier motif d'antenne (120 ; 120A ; 230B), dans lequel
le premier motif d'antenne (120 ; 120A ; 230B) et le deuxième motif d'antenne (130 ; 130A ; 240B) comprennent respectivement une première portion principale d'antenne (1212) et une deuxième portion principale d'antenne (1312), la première portion principale d'antenne (1212) et la deuxième portion principale d'antenne (1312) étant disposées à des positions telles que le premier motif d'antenne (120 ; 120A ; 230B) et le deuxième motif d'antenne (130 ; 130A ; 240B) ne se chevauchent pas dans une vue en plan de la première surface (111 ; 111A ; 211B), la deuxième surface (112 ; 112A ; 212B) étant vue à travers la première surface (111 ; 111A ; 211B) ;
un boîtier cylindrique (2) ;
un élément de guidage cylindrique (5) fait en résine, l'élément de guidage (5) étant disposé dans une ouverture (23) du boîtier (2), une surface intérieure de l'élément de guidage (5) étant pourvue d'une portion de fixation d'étiquette RFID (52) sur laquelle l'étiquette RFID (10 ; 10A ; 20B) est fixée ;
un module de capteur (4) logé dans le boîtier (2) et configuré pour détecter une pression d'un fluide cible de mesure ; et
un circuit électronique (72) configuré pour recevoir un signal de détection émis par le module de capteur (4) et connecté électriquement à l'étiquette RFID (10 ; 10A ; 20B).

2. Dispositif de mesure de grandeur physique selon la revendication 1, dans lequel :
le premier motif d'antenne (120) et le deuxième motif d'antenne (130) comprennent respectivement un premier motif spiralé (120) et un deuxième motif spiralé (130), l'un du premier motif spiralé (120) et du deuxième motif spiralé (130) s'étendant de l'intérieur vers l'extérieur et l'autre du premier motif spiralé (120) et du deuxième motif spiralé (130) s'étendant de l'extérieur vers l'intérieur ;
l'antenne RFID (100) comprend une portion de connexion (141) disposée dans un trou traversant (113) prévu dans le substrat isolant (110), la portion de connexion (141) connectant électriquement une portion d'extrémité extérieure (123) du premier motif d'antenne (120) et une portion d'extrémité extérieure (133) du deuxième motif d'antenne (130) ; et
le premier motif d'antenne (120) et le deuxième motif d'antenne (130) comprennent chacun une portion de croisement (1211 ; 1311), la portion de croisement (1211 ; 1311) étant disposée à une position telle que le premier motif d'antenne (120) et le deuxième motif d'antenne (130) se croisent dans la vue en plan de la première surface (111), la deuxième surface (112) étant vue à travers la première surface (111).

3. Dispositif de mesure de grandeur physique selon la revendication 1, dans lequel :
le premier motif d'antenne (120A) et le deuxième motif d'antenne (130A) comprennent respectivement un premier motif spiralé (120A) et un deuxième motif spiralé (130A), le premier motif spiralé (120A) et le deuxième motif spiralé (130A) s'étendant de l'intérieur vers l'extérieur ; et
l'antenne RFID (100A) comprend une portion de connexion (141A) disposée dans un trou traversant (113A) prévu dans le substrat isolant (110A), la portion de connexion (141A) connectant électriquement une portion d'extrémité extérieure (123A) du premier motif d'antenne (120A) et une portion d'extrémité intérieure (132A) du deuxième motif d'antenne (130A).

4. Dispositif de mesure de grandeur physique selon l'une quelconque des revendications 1 à 3, dans lequel :
le substrat isolant comprend une pluralité de substrats isolants stratifiés (210B ; 220B) ; et
l'antenne RFID (200B) comprend une couche d'isolation (270B) interposée entre la pluralité de substrats isolants stratifiés (210B ; 220B).
